**Europäisches Patentamt**

**European Patent Office**

**Office européen des brevets**

(19)

(11) Publication number : **0 390 822 B1**

# (12) EUROPEAN PATENT SPECIFICATION

(45) Date of publication of patent specification :
**13.09.95 Bulletin 95/37**

(51) Int. Cl.⁶ : **H04B 1/59,** H04B 5/00, G08C 19/28

(21) Application number : **89900004.6**

(22) Date of filing : **02.12.88**

(86) International application number :
**PCT/AU88/00469**

(87) International publication number :
**WO 89/05549 15.06.89 Gazette 89/13**

(54) IDENTIFICATION APPARATUS AND METHOD.

(30) Priority : **04.12.87 AU 5744/87**

(43) Date of publication of application :
**10.10.90 Bulletin 90/41**

(45) Publication of the grant of the patent :
**13.09.95 Bulletin 95/37**

(84) Designated Contracting States :
**AT BE CH DE FR GB IT LI LU NL SE**

(56) References cited :
**EP-A- 0 006 691**
**AU-A- 5 590 286**
**AU-A- 7 751 287**
**AU-B- 4 533 485**
**FR-A- 2 554 293**
**GB-A- 2 163 324**
**GB-A- 2 164 825**
**US-A- 3 964 024**
**AU-A-69961-1987**

(73) Proprietor : **MAGELLAN CORPORATION (AUSTRALIA) PTY. LTD.**
**1st Floor**
**184 St. Georges Terrace**
**Perth, W.A. 6000 (AU)**

(72) Inventor : **BROOKS, David, Robert**
**1st Floor, 184 St. Georges Terrace**
**Perth, W.A. 6000 (AU)**
Inventor : **MURDOCH, Graham, Alexander, Munro**
**1st Floor, 184 St. Georges Terrace**
**Perth, W.A. 6000 (AU)**

(74) Representative : **Newstead, Michael John et al**
**Page Hargrave**
**Temple Gate House**
**Temple Gate**
**Bristol BS1 6PL (GB)**

EP 0 390 822 B1

## Description

### FIELD OF INVENTION

The present invention relates to a system of multiple device identification. The present invention further relates to a system utilising a plurality of remote devices and/or passive labels, the passive labels being adapted to extract energy from an applied magnetic field, the energy enabling transmission by the label of a signal, unique or coded, to be identified by a receiver, the remote devices being powered so as to transmit said signal, unique or coded. Each label or device can transmit simultaneously. Transmitting and receiving apparatus and methods of the system are also herein contemplated. The present invention in a preferred form is suitable for transponder (or a plurality thereof) identification.

### PRIOR ART

Conventional passive identification or transponder systems known to Applicant utilise a system in which a single common carrier frequency is used to transmit data or identification codes from and/or to each transponder. Simultaneous transmission by more than one transponder results in co-interference between the signals so transmitted and prevent correct identification of any of the transmitting transponders i.e. simultaneous transmission gives rise to corrupted signal(s).

Furthermore, the Applicant is aware of AU-A-70052/87 which describes a radio meter reading system that is designed to correctly read signals from several transponders simultaneously. The system utilises a "wake-up" signal from the interrogation station to activate a battery powered transmitter in each transponder. Data containing amongst other things the transponders ID and the meter reading modulates a transmitted carrier signal. The frequency of the transmitted carrier signal is randomly varied using a frequency control voltage derived from a digital pseudo-random generator. The transmitter is designed to keep these carrier frequencies within an allowed band.

The system disclosed is not capable of precisely controlling the carrier frequencies. Consequently, direct coherent detection of the transponder signals is not possible. Powering of the receiving circuitry for detecting the "wake-up" signal requires a battery or other external source of electrical power. Beyond the "wake-up" signal, there is no communication from the interrogator to the transponders.

Australian Patent AU-A-34109/84 discloses a transponder that transmits two or more carrier frequencies modulated with identical data. The carrier frequencies are either harmonics or sub-harmonics of the interrogation powering frequency. The specification is directed to the determination of correct data that has been transmitted when there is coincidence between the data on at least two of the carrier channels. With sufficient harmonic and sub-harmonic channels, external interference is unlikely to eliminate all of the transmitting channels.

This specification does not disclose a device capable of correctly interrogating more than one transponder simultaneously.

All transponders are constrained to transmit identical harmonic and sub-harmonic frequencies and will consequently interfere on all channels if and when two or more transponders are active. The harmonics are generated by a square wave derived from the interrogation signal. Square waves are rich in odd harmonics. There is no possibility of selecting any particular harmonic(s) for transmission, as all harmonics are generated and radiated by square waves.

AU-A-69961/87 discloses a transponder having a signal generator capable of generating a signal at one of two frequencies and control means for controlling the signal generator to generate signals at one frequency or the other. The pattern of changes between the available frequencies defines the information transmitted by the transponder.

EP-A-0006691 discloses a transponder system in which a transponder coil is inductively coupled with transmitter and receiver coils of an interrogator unit. The resonance of the transponder coil is selected from a set of possible states by a control unit of the transponder. The pattern of changes between the available resonant states is controlled so that the receiver coil receives a signal containing information from the transponder.

FR-A-2554293 discloses a transponder which transmits information at a plurality of predetermined carrier frequencies simultaneously. It does not include control means for selecting the carrier frequencies from a predetermined set.

### OBJECT OF THE INVENTION

An object of the present invention is to provide a system wherein a plurality of devices may be simultaneously identified and/or a single device may also be identified.

A further object of the present invention is to provide a system which may be specifically designed to identify devices within an acceptable failure rate criterion.

A further object of the present invention is to provide a system having minimal co-interference and wherein a plurality of devices may be correctly identified by a single receiver even if the devices are in close proximity.

A further object of the present invention is to provide a multiple transponder identification system, each transponder therein being implemented in a single (IC) chip form.

Another object of the present invention is to provide a system adapted to identify many objects such as personnel, livestock, baggage, packages, cargo, stolen goods, vehicles, trains, wagons, shipping containers, security cards and may be used in environments requiring identifying or interrogating capabilities, such as inventory control and computer security.

Another object of the present invention is to provide a system wherein any one or all device(s) and/or transponder(s) therein can be interrogated or altered to response to a radiated magnetic field.

Another object of the present invention is to provide a system comprising disposable and cheap transponders or labels.

## SUMMARY OF THE INVENTION

The present invention provides a device to be identified comprising:

transmitter means adapted to transmit at least one information signal from the device to an external receiver, the transmitter means being adapted to transmit said information signal at a carrier signal frequency;

characterised in that the device comprises control means for selecting from a predetermined set of carrier signal frequencies the frequency of the carrier signal at which the transmitter means is to transmit said information signal.

Preferably the device is a transponder. Preferably there is provided a system of multiple transponder identification comprising:

at least two such transponders, a magnetic power field generator/radiator and a transponder identification code receiver, wherein

each transponder comprises receiver/transmitter means including an inductive means adapted to simultaneously receive power to operate the transponder and transmit coded modulated signal(s), memory means for storing an identification code, modulation means and control means, said receiver/transmitter means and memory means being adapted to jointly co-operate with said modulation means, when each transponder is under the influence of said power field to transmit an identification code unique to each transponder to said code receiver,

the control means being adapted to co-ordinate operation of said memory, modulation and receiver/transmitter means, and wherein

the code receiver receives each unique code and identifies each respective transponder.

The present invention in another aspect provides such a transponder comprising :

transponder receiver means adapted to extract powering energy from a surrounding electromagnetic field,

transponder transmitter means adapted to transmit at least one unique signal from the transponder,

frequency generating means for generating a plurality of predetermined frequencies, each frequency adapted to carry the signal from the transmitter means to an interrogator receiver means adapted to receive said signals to achieve identification of said transponder.

According to the present invention from a second aspect there is provided an identification system comprising: a device to be identified, the device comprising transmitter means adapted to transmit at least one information signal from the device to an external receiver, the transmitter means being adapted to transmit said information signal at a carrier signal frequency; a device identifier comprising the external receiver; and characterised in that the device comprises control means for selecting from a predetermined set of carrier signal frequencies the frequency of the carrier signal at which the transmitter means is to transmit said information signal.

The present invention further provides an identification system comprising:

a transponder as described above having means to extract powering energy from a surrounding electromagnetic field, and a transmitter means adapted to transmit one or more unique signals, and

receiver means adapted to receive said signals and identify said transponder.

The present invention also provides an identification system incorporating a transponder as described above.

The present invention also provides an identification system comprising :

a plurality of transponders as described above, each transponder having means to extract energy from a surrounding electromagnetic field and transmitter means adapted to transmit at least one unique signal at at least one frequency selected from a plurality of predetermined frequencies, and

receiver means adapted to receive each of said unique signals and identify said transponder.

The present invention further provides a system for simultaneously identifying a first and second label, each label comprising code storage means, modulation means and an inductive receiver/transmitter means, the system comprising :

magnetic field generator/radiator means for generating a magnetic field from which said first and secona labels are adapted to extract power using said inductive means,

each of said first and second labels, when so powered, respectively providing at least one unique code from the code storage means to the modulation means, said modulation means being adapted to provide at least one modulated code to the inductive means for transmission to a label identifying receiver,

each label adapted to modulate said at least one code onto at least one carrier frequency randomly selected from a predetermined finite set of modulation frequencies,

each label being further adapted to re-transmit its said at least one code at another or the same at least one frequency randomly selected from said set of frequencies while each label remains powered,

each label being embodied in a single (IC) chip.

The present invention also provides an identification system comprising :

a transponder adapted to transmit at least one data signal at at least one carrier frequency selected from a plurality of carrier frequencies, said transponder including control means for selecting said at least one selected frequency and, when the data has been transmitted, for re-selecting the or another at least one selected carrier frequency from the plurality of carrier frequencies in accordance with a predetermined probability weighting, the transponder being adapted to continue transmitting the data at the or another at least one selected frequency while the transponder is powered, and receiver means adapted to receive the or said another at least one frequency including demodulator means for obtaining the data.

The present invention further provides an identification system comprising :

a first and a second transponder, each as described above, said transponders being adapted to continuously transmit respective first and second data signals while each transponder is powered, the first and second data signals having a first and a second respective carrier frequency selected from respective first and second predetermined sets of possible carrier frequencies, said first and second transponders including respective first and second selector means for selecting the first and the second respective carrier frequency from said respective sets of frequencies,

receiver means for receiving the first and second data signals simultaneously,

demodulator means for demodulating the first and second data signals at their respective carrier frequency to obtain a first and second respective transponder identifying code.

The system may further comprise comparison means adapted to disregard corrupted transponder or label codes or signals.

The signal(s) may be at a radio frequency or at any other frequency.

The random selection of carrier or modulation frequency(s) provides improved resistance to interference between labels. Co-interference of labels may be statistically ignored by the identifying receiver.

Each transponder may continue to transmit its transponder identification code while under the influence of the generator or while being powered.

Each transponder may include at least one transmission break during which its transponder identification code is not transmitted.

The transponder identification code receiver may comprise demodulation means adapted to identify each transponder.

The present invention provides for the use of a passive coil label to extract energy from a surrounding applied field and the re-transmission by the passive label of a unique signal to be picked up by a receiver.

Reference herein to transponder(s) or label(s) should be read so as to include any other suitable device.

The present invention will now be described with reference to the accompanying drawings, wherein :

Figures 1A and 1B show an identification system in accordance with the present invention.

Figures 2A, 2B, 3A, 3B and 4A, 4B show embodiments of a transponder suitable for use in the present invention.

Figure 5 shows a circuit for generating the transponder carrier signal.

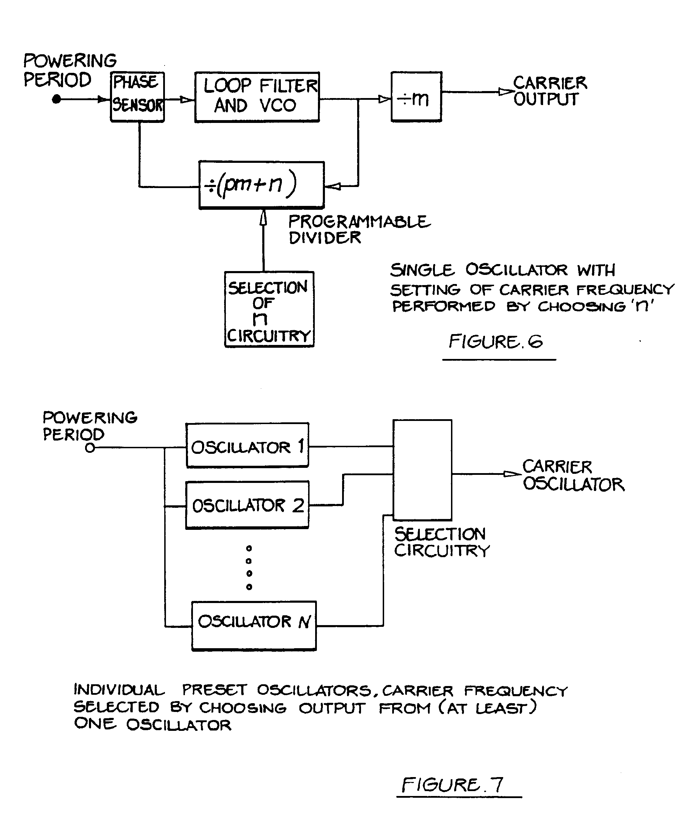

Figures 6 and 7 show alternative embodiments capable of generating a plurality of carrier frequencies.

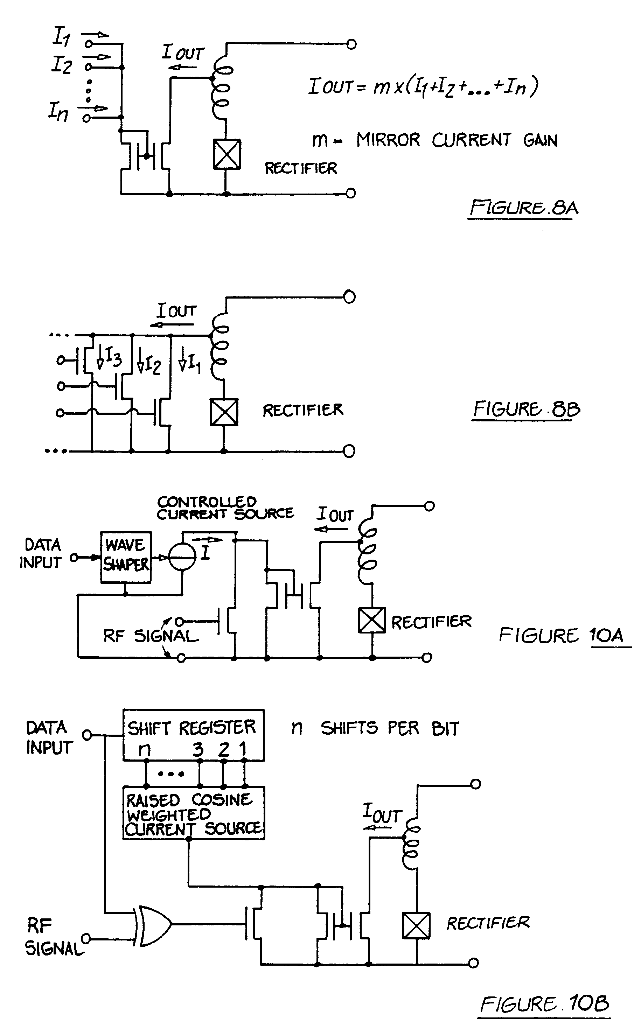

Figures 8A and 8B show two circuits for transmitting two or more modulated carrier signals simultaneously and independently of each other.

Figure 9 shows a schematic of a coherent receiver.

Figures 10A and 10B show two circuits for envelope shaping the modulated carrier signal to reduce sideband interference between channels.

Figures 11 and 12 show modulation detection circuits.

The or each, transponder may be embodied in a single (IC) chip form. An external capacitor may be used to store the chip operating voltage. The receiver/transmitter inductive means, preferably a single coil, may also be mounted externally to the chip.

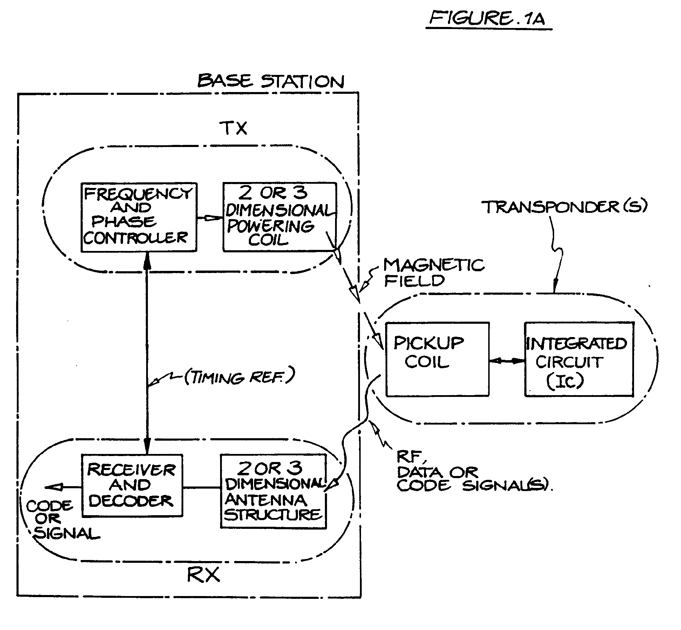

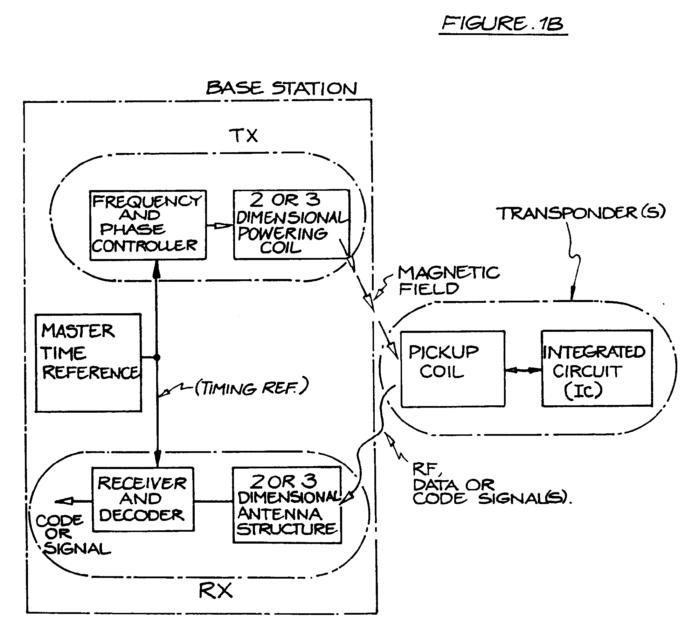

With reference to Figures 1A and 1B, the base station may include a transmitter for generating an ultrasonically oscillating magnetic field. The transponder(s) may contain a tuned pickup coil which may extract power and/or timing and/or other information from the magnetic field. The frequency, magnitude and phase of the magnetic field generated by the base station may be carefully controlled to enable the power picked up by the transponder coil to be adequate for most transponder orientations. A magnetic field radiated in two or three dimensions will aid power and information reception by the transponder(s). Identification codes and/or specially stored or other information may be transmitted from the transponder to a receiver in the base station, conventionally, by an RF or other suitable signal. Programming and/or interrogation of temporary or permanent memory on one or more transponder(s) may be performed conventionally, for example by modulation of the powering field. Concatonated coil(s) may be used to maintain field intensity in a predetermined space through which the transponder(s) will move. Magnetic field concentrator(s) may be used to amplify field intensity.

Furthermore, the transponder(s) may generate one or more carrier frequencies from an available set of carrier frequencies. These carrier frequencies are preferred not to be harmonically related to the frequency of the powering magnetic field. By allowing each transponder to use any one of a multiplicity of available carrier frequencies, many transponders simultaneously transmitting to the base station may be identified under conditions where co-interference would normally preclude correct identification. Ensuring correct identification may be enhanced by reducing the possibility of more than one transponder simultaneously transmitting at the same frequency. An idle state, during which a transponder does not transmit, may aid correct identification. The number of carrier frequencies and idle states may be contingent upon the particular application. The correct identification of a transponder may be reliant upon the transponders having a carrier frequency or mix of carrier frequencies, free of interference by other transponders, to transmit on. The particular mix of carrier frequencies, idle states and probability weightings may be chosen to maximise the probability of any one transponder having a free channel to transmit, to a receiver, its identification code word. Inclusion of redundant frequency channels may guard against the possibility of chance transponder interference. Signals which may have been corrupted or co-interfered with may be ignored by the receiver, and may thereby enable the system to operate within a predetermined failure rate criterion. Corrupted or co-interfered signals may be determined on a statistical basis or by means of an error detecting code. The transponder(s) may transmit the identifying code at a randomly selected frequency(s), selected from a set of available carrier frequencies, and, once transmission is completed, again re-transmit the code at the same or another frequency(s) selected from the carrier frequency set. The identifying code may be used to modulate the selected frequency(s).

The system of transponder identification according to the present invention may allow for identification of a number of objects by a uniquely coded transmission from a passive transponder or label attached to each object, identification occurring at substantially the same time.

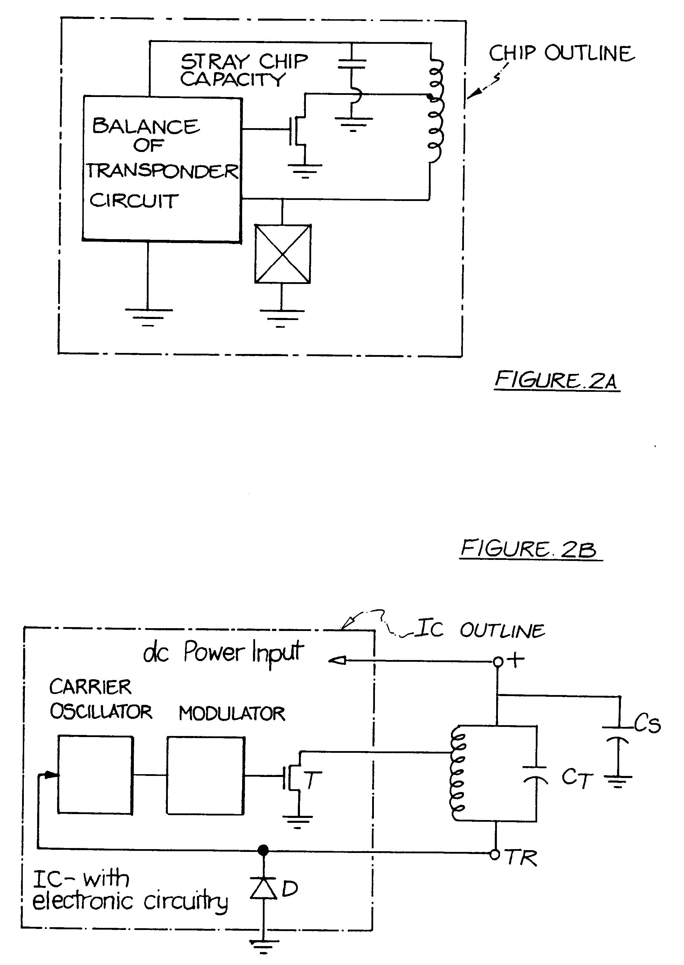

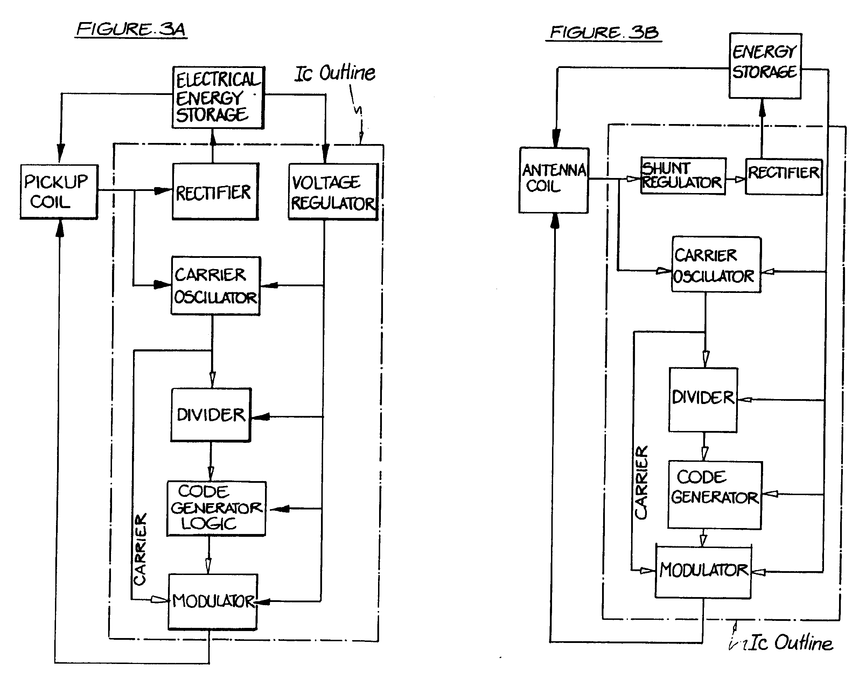

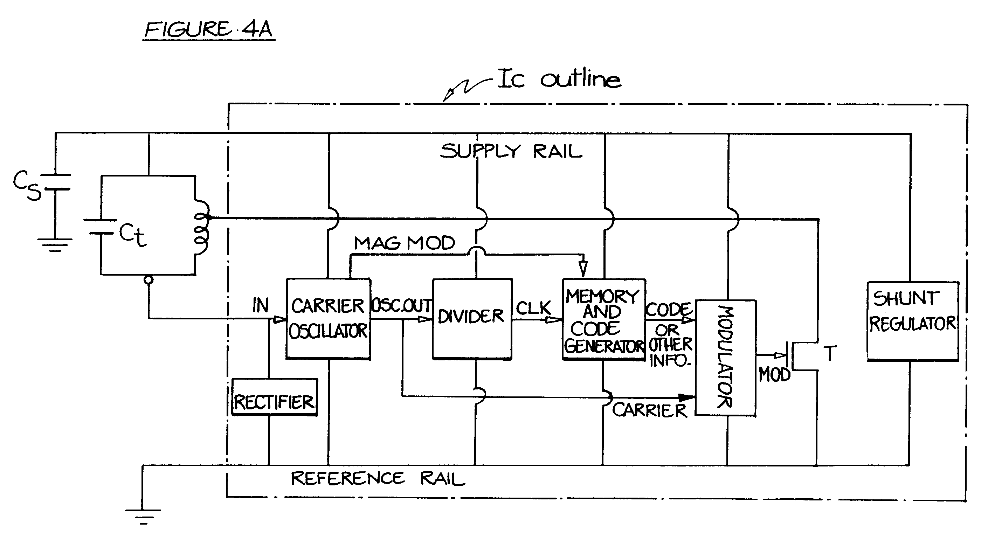

With reference to Figures 2A, 2B, 3A, 3B, 4A and 4B, power, preferably in the form of a magnetic field, may be transmitted inductively or radiated to the transponder. Each transponder may include one or more pickup or receiver transmitter coils or inductive means. To minimise detailing, further reference herein is made to only single coiled transponder(s). A pickup coil, preferably tuned, may be situated in the transponder to collect or receive the power. After rectification, the power may be utilised by an integrated circuit (IC) within the transponder. The frequency of the powering signal may be used as a universal frequency reference for both the IC and the base station (Figure 1A). Alternatively, an oscillator in the base station may serve as a universal timing reference for the powering signal, base station receiver and transponder IC (Figure 1B). The transponder IC derives its frequency reference from the powering signal (Figures 2A, 2B, 3A, 3B, 4A and 4B). Each transponder may be controlled and/or programmed by modulating the inductive powering field. This modulation may enable data or commands to be transmitted to one or more transponder(s). This modulation may be used, for example, to program data into the transponder, set bit(s) in the transponder which may control the transponder's function e.g. a bit to disable transmission permanently when the transponder is discarded, or control the transponder's activity while it is being inductively interrogated e.g. forcing a change in the transponder's carrier frequency, or generally controlling and/or interrogating other transponder units or functions.

To ensure that the transmission of power and/or signal(s) is as uniform as possible, a two, or if necessary, a three dimensional antenna system may be used. An antenna structure at the base station may receive the transponder's coded carrier transmission. With regard to the IC of a transponder, it may generate one or more non-harmonically related carrier signals from the frequency of the powering field. The method of generating these carrier signals will be explained further on.

The carrier signals generated by the IC are phase locked to the powering signal. The powering signal is derived from a master oscillator in the base station. Coherent locking of the carrier signals allows direct coherent demodulation of the coded carrier signal by the receiver and demodulator in the base station. Coherent detection is the optimum detection scheme for coded carrier signals. The frequency of the powering field or a carrier signal divided down may be utilised as a clocking signal for the IC. A unique code, preset, programmed or selected in the IC may be used to modulate the carrier signal at a rate determined by the clocking signal. The modulator may produce a modulated RF signal using, typically, phase modulation, amplitude, pulse width, pulse position or other modulation. This code modulated signal may be injected into the transponder pickup coil for inductive transmission to a receiving antenna structure.

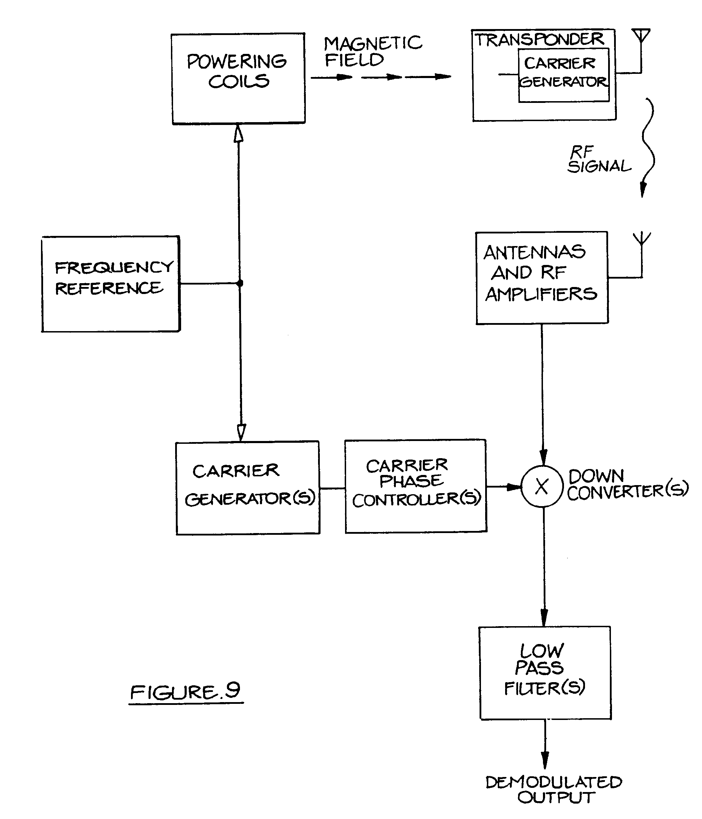

The signal(s) received from one or more transponder(s) may be amplified and coherently detected, using a local oscillator locked on to the powering field's frequency or preferably the base stations master time reference oscillator. A multiplicity of coherent detection schemes may be used to detect the received signal(s), all of which are known to those skilled in the art of communication. For example, direct homodyne detection of a transponder carrier may be possible using a local oscillator locked to the transmitted powering field's frequency (Figure 9). The power field's frequency may be used as a universal timing reference. For a preferred modulation scheme (phase modulation), optimum detection may be realised using correlators locked to the powering field's frequency. Either a frequency agile receiver or a multiplicity of receivers may be tuned to the different possible carrier frequencies contained within the set of carrier frequencies to receive the transmitted signal from the transponder(s).

For those applications where the orientation of the transponder may be random, such as baggage and livestock identification, special antenna structures may be necessary such that the voltage picked up by the transponder(s) coil, which may be dependent upon the cosine of the angle between the transponder coil axis and the direction of the magnetic field, is preferably substantially constant over a large volume of space, and so that rapidly moving transponders may be satisfactorily identified. Ideally, the power transferred to each transponder coil should be independent of transponder orientation.

To provide an isotropic powering field three sets of coils may be orientated along the X,Y and Z axes. The phase and frequency used to drive these coils may be carefully controlled to generate an isotropic powering field and provide a uniform field over a substantial volume of space. Two coils may alternatively be used.

The data transmitted from the transponder may be received by loop antennae set up in two or three dimensions or axes. The data signals from each axis may be detecting separately and may be combined for decoding or decoded separately.

Interference may be cancelled by mounting a set of "interference coils" in proximity of the transponder(s) data or signal receiving coils. The signal from the interference coil may be subtracted from the receiver signal cancelling any interference. Cancellation may be done at the carrier's frequency.

By having one or more transponder(s) select, preferably randomly, from a plurality of possible transmission frequencies, and/or by utilising one or more transmission break(s), during which no transmission from at least one transponder is made, or a combination of these, the simultaneous identification of a plurality of transponders may be possible. Each transponder in the system of the present invention, when powered, may begin to transmit its code or other information. This transmission may be continuous while the transponder is powered. The transmission may be based on a preferably randomly selected frequency(s), from a possible set of frequencies, or transmission breaks.

A method, of identification for use in a system as described hereinbefore, the system being adapted for any system designed to identify transponder(s) or labels, may include an acceptable failure rate criterion. The correct identification of each transponder may require that each transponder has at least one complete code or data word transmission free of interference from other transponder(s).

For a transponder to be correctly identified it only requires one good read during an interrogation cycle. Alternatively, for the transponder to not be identified requires that all reads are bad, i.e. P (at least one good read) = 1 - P (all reads are bad).

Probability that a read is good requires that no other transponder is using the same carrier frequency, if there are "m" transponders and "n" channels and each transponder's transmissions are independent of all other than this probability is :

$$\left(\frac{n-1}{n}\right)^{2(m-1)}$$

hence the probability that a transmission is bad is :

$$1 - \left(\frac{n-1}{n}\right)^{2(m-1)}$$

and the probability that of k code transmissions all are bad is

$$\left(1 - \left(\frac{n-1}{n}\right)^{2(m-1)}\right)^{k}$$

This is the probability that a particular transponder will fail to be identified during an interrogation cycle.

By carefully choosing the number of carrier frequencies available to a transponder and/or the availability of a transmission break, the system's failure rate may be matched to the acceptable failure rate.

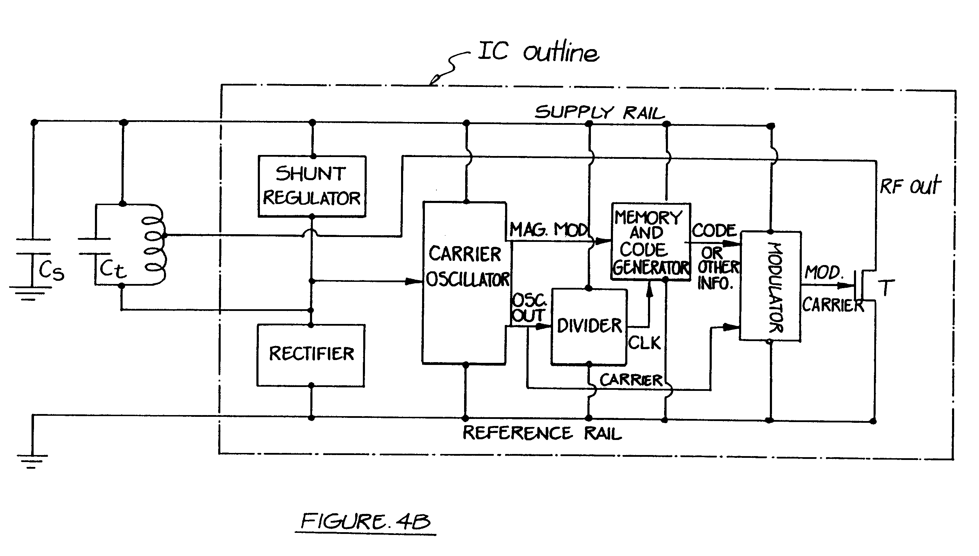

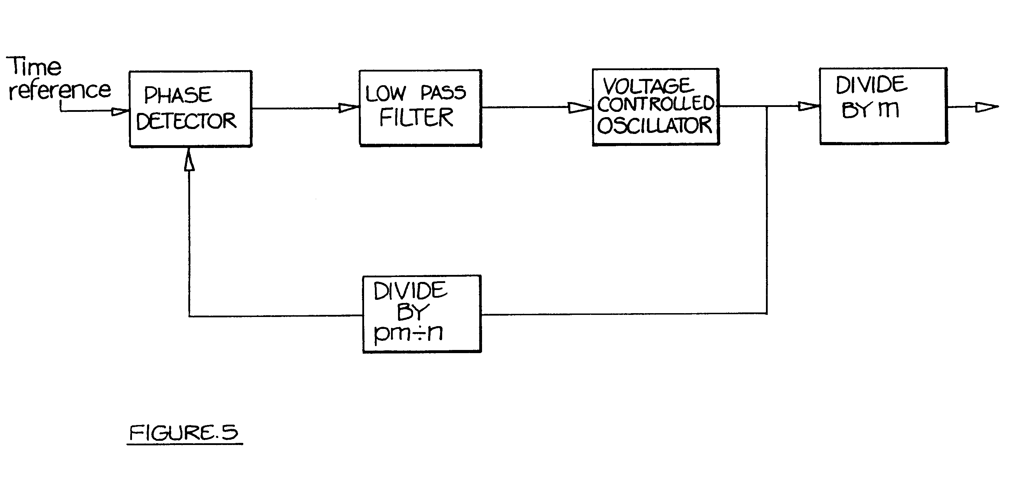

A carrier generator in each transponder or label may generate carrier frequency(s) for use by the modulation means. The carrier frequency(s) may be generated by one or more voltage controlled oscillators (VCO's) which may be phase locked to the frequency of the inductive powering field. The output carrier frequency may equal $(p + \frac{n}{m})$ x (frequency of inductive power field); where p is a harmonic of the powering field's frequency and the ratio $\frac{n}{m}$ is not an integer (Figures 5 and 6). A circuit for generating the carrier frequency is shown in Figure 5. The circuit is a phase locked loop (PLL) incorporating a frequency divider in the feedback loop. This type of circuit is well known and acts as a frequency multiplier with the output frequency of the VCO (or other similar controlled oscillator) equal to the divider magnitude :
frequency VCO = (pm + n) x frequency time reference.

The VCO output frequency will always be a harmonic of the powering field and potentially would be prone to interference from the field's harmonics. Dividing the VCO output by "m" changes the output frequency such that only every $m^{th}$ carrier frequency coincides with a power field harmonic. In the preferred embodiment these frequencies are not utilised by the transponder. Consequently, the powering field's harmonics may never interfere with the carrier transmissions.

A further advantage of this method of phase coherent carrier generation is that a similarly generated local oscillator signal at the base station can be used to coherently detect and demodulate the carrier signal(s). This oscillator can be phase locked to the powering field (like the transponder carrier oscillator) or in its preferred form to a master time reference oscillator from which the power field's frequency is derived. Direct homodyne detection of the carrier can be done using identical frequency generating parameters n, m and p as used by the transponder carrier oscillator. Alternatively the carrier signal can be converted to an intermediate frequency (IF) before detection. These coherent detection principles are widely utilised and well understood.

The present invention may provide a system in which control of the selection of a carrier frequency(s) and/or transmission break(s) may be accomplished. Varying degrees of complexity may be implemented by the selection circuitry. In one embodiment, a pulse of modulation, on the powering field, may cause any affected transponders to randomly select a carrier frequency or transmission break. By appropriate coding of this modulation of the powering field, coupled with suitable detection and decoding circuitry on each transponder, more elaborate selection schemes such as, turning off a particular transponder's transmission, forcing some or all transponders off a channel(s), or changing a particular transponder's channel may be implemented. Frequency, phase, amplitude or pulse modulation or any combination of these can be used to modulate the magnetic powering field.

For an arbitrarily modulated oscillating magnetic field, the data rate may be limited by the bandwidth of the transponder's antenna. This may be sufficiently large to allow a data rate of any required number of kilobits per second.

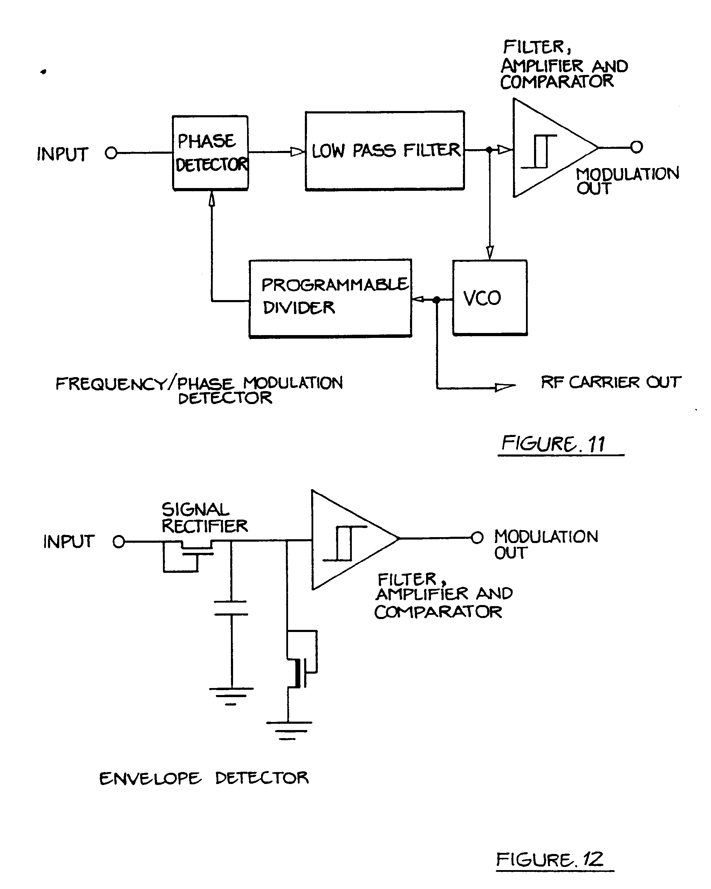

Preferably, the magnetic field may be phase or frequency modulated because these may not appreciably affect the power transmission from the transmitter to the receiving unit. Amplitude, pulse width or pulse position modulation may also be used. Figures 11 and 12 show circuits for detecting this modulation.

The simultaneous action of power transfer and data or command transmission by a magnetic field may allow the remote control of electro-mechanical devices and/or electronic circuits and the remote programming of $E^2$ PROM or conventional CMOS memory with battery backup in a manner similar to that as detailed herein.

Arbitrary probability weightings of selection may also be assigned to each carrier frequency and/or idle state. Alternatively, a transponder may randomly select either a transmission break or carrier frequency. The carrier frequency of the transponder may be altered after each completed code or data word transmission or the transmission of more than one code or data word before reselecting the carrier frequency.

The system may also provide for the simultaneous transmission of more than one carrier frequency by any transponder. Transmission of more than one carrier can be used to increase the communication reliability or to increase the rate of data transmission. Different sets of data or unique signals can be transmitted on different carrier frequencies. A transponder may select a subset of carrier frequencies from the full set of available carrier frequencies. The exact number of carriers transmitted, the size of the full set of carrier frequencies and the method of selection i.e. whether controlled or by random internal selection, would depend upon the particular transponder's application.

It has been shown mathematically, that in a system of "m" labels, each randomly choosing one out of "n" distinct radio channels before each transmission, if a total of "k" transmissions are possible (by any one label) within the available time, the probability of one or more labels failing to be identified, is given by

$$\left(1 - \left(\frac{n-1}{n}\right)^{2(m-1)}\right)^k$$

The use of certain, inherently random, natural processes (to generate the random numbers used here to select the transmitting channel), is well known. Examples used in practical equipments include radioactive decay processes, and the so-called "shot noise" generated by quantum mechanical processes within semiconductor diodes.

These processes are, however, somewhat awkward to implement on a semiconductor, VLSI, "chip". The noise-diode approach, in particular, suffers from the risk that the "noise" signal (which is at a low amplitude) will be contaminated by other, stronger electrical signals present on the chip. This could seriously impair the statistical properties of such a signal.

The use of a "Pseudo-Random Binary Sequence" (PRBS) generator, in digital systems, is well known. The device typically comprises a digital shift register (built using any known method), associated with a computing means (typically an arrangement of logical gate circuits), which generates a binary, logical function of the shift register's contents. This value is applied to the serial input of the shift register. As the shift register is clocked, a new binary number appears in the several "bits" of the register.

With a careful choice of register length, and of the mathematical function generated by the said computing means (the "feedback function"), it is possible to generate a sequence having as many as $2^N-1$ distinct values (a so-called maximal-length, or "M-" sequence) using a N-bit shift register. Such a sequence can exhibit mathematical properties closely approximating a true, random sequence.

On the face of it, such a device is inherently unsuitable for the present purpose. The reason is that, when the label is first excited by the powering magnetic field, there is no means to determine what will be the initial contents of said shift register. In practice, the initial value will almost always be a constant value, identical for every label. (The value will be a function of the physical circuit layout on the VLSI chip. This, of course, is the same for every label).

In such a case, every label being initially started at the same number, the feedback function will reproduce identically in every label, and they will continually transmit on the same channel. This defeats the purpose of the system.

A simple modification permits the use of a PRBS generator (so gaining its acknowledged advantages of inherent suitability for VLSI implementation), but avoids the problem aforementioned.

Recall that the labels contain, inter alia, a "memory means" to record their identification codes. Let this memory means be expanded sufficiently to store, besides said identification code, a further number, having as many bits as has the PRBS shift register. Let the control circuitry in the label be so adapted that, whenever the label is first excited by the powering field (i.e. its logic circuitry "starts up"), this additional number is loaded into said PRBS register. This number being loaded, the PRBS generator operates as described.

Let further, the associated programming means (the equipment which initially stores the identification code in said memory means) be further adapted to store also, a randomly generated number (another PRBS circuit would suffice here) in the additional memory space aforementioned.

With a total of "N" binary bits in the PRBS register, we have now a 1 in $2^N-1$ chance that two labels will start up at the same point in their PRBS sequences. In that event, the system will fail, since these two will always "track" each other. With a target value for system reliability determined, this rule fixes a minimum length for the PRBS generator. Commonly, the PRBS register will be given a length equal to the next prime number, larger than the size found above.

The PRBS system is particularly effective, if both the number of bits, N, in the register, and the number of PRBS states, $2^N-1$, are both prime. In this case, however many times the register is shifted between channel selections, all possible states will be exhausted before the cycle repeats. An example of such a PRBS circuit comprises a 17-bit register, with the feedback function comprising an exclusive-OR of the 14th and 17th bits. The numbers 17 and 131071 are both prime.

It is desirable that the register should be shifted, between channel selections, a number of places greater than its own length. This ensures that the "randomising" process has been applied to every bit in the register. Any desired subset of the register bits may be used to effect the channel selection.

## Claims

1. A device to be identified comprising:

   transmitter means adapted to transmit at least one information signal from the device to an external receiver, the transmitter means being adapted to transmit said information signal at a carrier signal frequency;

   characterised in that the device comprises control means for selecting from a predetermined set of carrier signal frequencies the frequency of the carrier signal at which the transmitter means is to transmit said information signal.

2. A device as claimed in claim 1, wherein the or each information signal is transmitted using, at each transmission, a newly selected carrier signal frequency or set of newly selected carrier signal frequencies.

3. A device as claimed in claim 2, wherein the control means re-selects the newly selected carrier signal frequency(s) from the predetermined set of carrier signal frequencies for retransmission of said information signal.

4. A device as claimed in claim 2 or claim 3, wherein said device continues to reselect frequency(s) and retransmit said information signal while the device is powered.

5. A device as claimed in any preceding claim, wherein the transmitter means is adapted to transmit a number of information signals, each at a plurality of selected carrier signal frequencies.

6. A device as claimed in claim 1 or claim 2, wherein the or each information signal is transmitted at a set of selected carrier signal frequencies sequentially or cyclically.

7. A device as claimed in claim 1 or claim 2, wherein the or each information signal is transmitted at a set of selected carrier signal frequencies simultaneously.

8. A device as claimed in claim 7, wherein the or each information signal is transmitted at different sets of selected carrier signal frequencies sequentially or cyclically.

9. A device as claimed in any preceding claim, wherein the frequency of the selected carrier signal frequency or set of selected carrier signal frequencies is selected independently of external influence.

10. A device as claimed in any preceding claim, wherein the frequency of the selected carrier signal frequency or set of selected carrier signal frequencies is determined internally of the device.

11. A device as claimed in claim 10, further comprising:
   memory means for storing said predetermined set of carrier signal frequencies.

12. A device as claimed in any preceding claim, wherein the selection or the reselection of a carrier signal frequency is performed in accordance with a predetermined probability weighting.

13. A device as claimed in claim 12, wherein each probability weighting corresponds to a carrier signal frequency and is assigned in accordance with a desired use of the corresponding carrier signal frequency.

14. A device as claimed in any preceding claim, wherein the carrier signal frequency used at each transmission of the selected carrier signal frequency or set of selected carrier signal frequencies is selected randomly or pseudo-randomly.

15. A device as claimed in claim 14, wherein the control means uses a pseudo-random binary sequence (PRBS) logic circuit to randomly select or reselect said selected frequency(s).

16. A device as claimed in claim 15, wherein the PRBS is adapted to have an initial value loaded therein when the device is first powered, the value being stored in a memory in the device.

17. A device as claimed in claim 16, wherein the value is arbitrarily assigned to the device before use of the device.

18. A device as claimed in any preceding claim, wherein the transmitter means is adapted to go to an idle state or transmit on a redundant channel in order to provide a break in transmission for a predetermined period of time.

19. A device as claimed in any preceding claim, wherein upon receipt of an external selection signal, the control means selects or reselects the or at least one of the carrier signal frequency(s) for transmission.

20. A device as claimed in any preceding claim, wherein the or each information signal is transmitted in response to an interrogation signal.

21. A device as claimed in any preceding claim, further comprising:
   frequency generating means for generating carrier signal frequencies.

22. A device as claimed in any preceding claim, further comprising device receiver means adapted to receive timing information from an external source.

23. A device as claimed in claim 22 as dependent on claim 21, wherein said frequency generating means is synchronised to said timing information.

24. A device as claimed in claim 22 or claim 23, wherein said timing information is extracted from a surrounding electromagnetic field.

25. A device as claimed in claim 24, wherein powering energy is also extracted from said electromagnetic field.

26. A device as claimed in any of claims 1 to 21, wherein the device is asynchronous.

27. A device as claimed in any preceding claim, wherein the device is a passive device.

28. A device as claimed in any preceding claim, wherein the device is embodied in an (IC) chip.

29. A device as claimed in claim 28, wherein the chip is a VLSI chip.

30. A device as claimed in any preceding claim, wherein the or at least one of the said information signals is a signal unique to the device for the identification of said device.

31. A device as claimed in claim 30, wherein the unique information signal is arbitrarily assigned to the device before use of the device.

32. A device as claimed in claim 30 or claim 31, comprising:
   receiver/transmitter means including an inductive means adapted to transmit coded modulated signal(s), memory means for storing the unique information signal, and modulation means,
   said receiver/transmitter means and memory means, being adapted to jointly co-operate with said modulation means to transmit at the selected carrier signal frequency the unique information signal,

the control means being adapted to co-ordinate operation of said memory, modulation and receiver/transmitter means.

33. An identification system comprising:

a device to be identified, the device comprising transmitter means adapted to transmit at least one information signal from the device to an external receiver, the transmitter means being adapted to transmit said information signal at a carrier signal frequency;

a device identifier comprising the external receiver; and

characterised in that the device comprises control means for selecting from a predetermined set of carrier signal frequencies the frequency of the carrier signal at which the transmitter means is to transmit said information signal.

34. An identification system as claimed in claim 33, comprising at least two spaced apart identifiable devices each comprising transmitter means adapted to transmit at least one information signal from that device to the external receiver, the transmitter means being adapted to transmit said information signal at a carrier signal frequency; and control means for selecting from a predetermined set of carrier signal frequencies the frequency of the carrier signal at which the transmitter means is to transmit said information signal.

35. An identification system as claimed in claim 34, wherein the device identifier comprises system receiver means adapted to receive each selected carrier signal frequency for identification of each of said devices.

36. An identification system as claimed in claim 35, wherein each of said selected carrier signal frequencies is received simultaneously.

37. An identification system as claimed in claim 35 or claim 36, wherein the receiver means includes logic means adapted to ignore incoming signals having the same selected carrier signal frequency.

38. An identification system as claimed in claim 34, wherein each of the devices is a device as claimed in any of claims 30 to 32, the system comprising a device identification code receiver, and wherein

each device transmits its unique identification signal to said code receiver and the code receiver receives each unique code and identifies each respective device.

39. A system as claimed in claim 38, wherein each device is comprised in a label.

40. A system as claimed in claim 38 or claim 39, wherein the code receiver includes demodulator means for demodulating the information signal.

41. A system as claimed in claim 40, wherein said demodulator means is adapted to demodulate the information signals from first and second devices at their respective carrier signal frequencies to obtain first and second respective device identifying codes.

42. A system as claimed in any of claims 38 to 41, further comprising comparison means adapted to disregard corrupted device or label codes or signals.

43. A system as claimed in any of claims 38 to 42, wherein the system includes an electromagnetic power field generator/radiator for generating an electromagnetic power field, and the device includes inductive means adapted to receive power from the power field to operate the device.

44. A system as claimed in claim 43, wherein the devices are as claimed in claim 30 as dependent directly or indirectly on claim 22, and the receiver means is synchronized to the frequency of the electromagnetic field to facilitate demodulation of each signal.

45. A system as claimed in claim 43 or claim 44, wherein the at least one selected carrier signal frequency is phase coherently generated using the power field as a frequency reference.

46. A system as claimed in claim 45, wherein the at least one carrier signal frequency is generated using at least one phase-locked loop frequency multiplier, and subsequently divided to obtain a desired carrier signal frequency.

47. A system as claimed in claim 46, wherein frequencies generated which correspond to harmonics of the power field are ignored.

48. A method of communication between an interrogator and at least one remote device, said method comprising the steps of:

each remote device generating a first information signal for transmission via a carrier signal at a frequency selected by each respective remote device from a respective predetermined set of carrier signal frequencies, the frequency of the carrier signal being determined by each remote device;

transmitting said first information signals from each remote device to the interrogator; and generating and transmitting the first information signals successively or repetitively at each transmission via a new carrier signal, the frequency of the new carrier signal being newly selected internally of each remote device.

49. A method as claimed in claim 48, wherein there is a plurality of said remote devices and each remote device transmits its respective first information signal to the interrogator simultaneously.

50. A method as claimed in claim 48 or claim 49, wherein the or each first information signal includes a code unique to the remote device that transmitted that information signal.

**Patentansprüche**

1. Identifizierbare Einrichtung mit:
   einem Sendemittel, das daran angepaßt ist, mindestens ein Informationssignal von der Einrichtung zu einem außerhalb befindlichen Empfänger zu senden und das Sendemittel angepaßt ist, das Informationssignal auf einer Trägersignalfrequenz zu senden, dadurch gekennzeichnet, daß die Einrichtung Steuermittel aufweist, um aus einem festgelegten Satz von Trägersignalfrequenzen die Frequenz des Trägersignals auszuwählen, auf der das Sendemittel das Informationssignal senden soll.

2. Einrichtung nach Anspruch 1, dadurch gekennzeichnet, daß das oder jedes zu sendende Informationssignal bei jedem Senden eine neu ausgewählte Trägersignalfrequenz oder einen Satz neu ausgewählter Trägersignalfrequenzen benutzt.

3. Einrichtung nach Anspruch 2, dadurch gekennzeichnet, daß das Steuermittel die neu ausgewählte(n) Trägersignalfrequenz(en) aus dem festgelegten Satz von Trägersignalfrequenzen wieder auswählt, um das Informationssignal wieder zu senden.

4. Einrichtung nach Anspruch 2 oder 3, dadurch gekennzeichnet, daß die Einrichtung fortfährt, die Frequenz(en) wieder auszuwählen und das Informationssignal wieder zu senden, während die Einrichtung bestromt wird.

5. Einrichtung nach einem oder mehreren der vorstehenden Ansprüche, dadurch gekennzeichnet, daß das Sendemittel daran angepaßt ist, eine Mehrzahl von Informationssignalen jeweils auf einer Mehrzahl von ausgewählten Trägersignalfrequenzen zu senden.

6. Einrichtung nach Anspruch 1 oder 2, dadurch gekennzeichnet, daß das oder jedes Informationssignal sequentiell oder zyklisch auf einem Satz ausgewählter Trägersignalfrequenzen gesendet wird.

7. Einrichtung nach Anspruch 1 oder 2, dadurch gekennzeichnet, daß das oder jedes Informationssignal auf einem Satz ausgewählter Trägersignalfrequenzen simultan gesendet wird.

8. Einrichtung nach Anspruch 7, dadurch gekennzeichnet, daß das oder jedes Informationssignal auf verschiedenen Sätzen ausgewählter Trägersignalfrequenzen sequentiell oder zyklisch gesendet wird.

9. Einrichtung nach einem oder mehreren der vorstehenden Ansprüche, dadurch gekennzeichnet, daß die Frequenz der ausgewählten Trägersignalfrequenz oder des Satzes ausgewählter Trägersignalfrequenzen unabhängig äußerer Einflüsse ausgewählt wird.

10. Einrichtung nach einem oder mehreren der vorstehenden Ansprüche, dadurch gekennzeichnet, daß die Frequenz der ausgewählten Trägersignalfrequenz oder des Satzes ausgewählter Trägersignalfrequenzen im Inneren der Einrichtung bestimmt wird.

11. Einrichtung nach Anspruch 10, gekennzeichnet durch ein Speichermittel zum Speichern des festgelegten Satzes von Trägersignalfrequenzen.

12. Einrichtung nach einem oder mehreren der vorstehenden Ansprüche, dadurch gekennzeichnet, daß die Auswahl oder die Wiederauswahl einer Trägersignalfrequenz gemäß einer festgelegten Wahrscheinlichkeitsbewertung ausgeführt wird.

13. Einrichtung nach Anspruch 12, dadurch gekennzeichnet, daß jede Wahrscheinlichkeitsbewertung zu einer Trägersignalfrequenz korrespondiert und gemäß einer gewünschten Verwendung der korrespondierenden Trägersignalfrequenz zugeordnet wird.

14. Einrichtung nach einem oder mehreren der vorstehenden Ansprüche, dadurch gekennzeichnet, daß die bei jeder Übertragung der ausgewählten Trägersignalfrequenz oder dem Satz ausgewählter Trägersignalfrequenzen verwendete Trägersignalfrequenz zufällig oder pseudo-zufällig ausgewählt wird.

15. Einrichtung nach Anspruch 14, dadurch gekennzeichnet, daß das Steuermittel eine Pseudo-Zufällige-Binärsequenz-(PRBS)-Logikschaltung verwendet, um zufällig die ausgewählte(n) Frequenz(en) auszuwählen oder wieder auszuwählen.

16. Einrichtung nach Anspruch 15, dadurch gekennzeichnet, daß die PRBS angepaßt ist, um einen darin geladenen Anfangswert zu besitzen, wenn die Einrichtung erstmals bestromt wird, wobei der Wert in einem Speicher in der Einrichtung speicherbar ist.

17. Einrichtung nach Anspruch 16, dadurch gekennzeichnet, daß der Wert der Einrichtung vor ihrer Verwendung frei zugeordnet wird.

18. Einrichtung nach einem oder mehreren der vorstehenden Ansprüche, dadurch gekennzeichnet, daß das Sendemittel angepaßt ist, um in einen Ruhezustand zu gelangen oder auf einem Redundanzkanal zu senden, um während einer festgelegten Zeitspanne eine Sendepause zur Verfügung zu stellen.

19. Einrichtung nach einem oder mehreren der vorstehenden Ansprüche, dadurch gekennzeichnet, daß bei Empfang eines von außen ausgewählten Signals das Steuermittel die oder mindestens eine der Trägersignalfrequenz(en) zum Senden auswählt oder wieder auswählt.

20. Einrichtung nach einem oder mehreren der vorstehenden Ansprüche, dadurch gekennzeichnet, daß das oder jedes Informationssignal in Reaktion auf ein Abfragesignal gesendet wird.

21. Einrichtung nach einem oder mehreren der vorstehenden Ansprüche gekennzeichnet durch ein Frequenzerzeugungsmittel zur Erzeugung von Trägersignalfrequenzen.

22. Einrichtung nach einem oder mehreren der vorstehenden Ansprüche mit einem angepaßten Empfängermittel, um Zeitinformationen von einer außen liegenden Quelle zu empfangen.

23. Einrichtung nach Anspruch 21 und 22, dadurch gekennzeichnet, daß das Frequenzerzeugungsmittel mit den Zeitinformationen synchronisiert ist.

24. Einrichtung nach Anspruch 22 oder 23, dadurch gekennzeichnet, daß die Zeitinformation aus einem Umgebungselektromagnetfeld stammt.

25. Einrichtung nach Anspruch 24, dadurch gekennzeichnet, daß die Bestromungsenergie ebenfalls aus dem Elektromagnetfeld stammt.

26. Einrichtung nach einem oder mehreren der Ansprüche 1 bis 21, dadurch gekennzeichnet, daß die Einrichtung asynchron ist.

27. Einrichtung nach einem oder mehreren der vorstehenden Ansprüche, dadurch gekennzeichnet, daß sie passiv ist.

28. Einrichtung nach einem oder mehreren der vorstehenden Ansprüche, dadurch gekennzeichnet, daß sie in einem (IC) Chip aufgebaut ist.

29. Einrichtung nach Anspruch 28, dadurch gekennzeichnet, daß der Chip ein VLSI-Chip ist.

30. Einrichtung nach einem oder mehreren der vorstehenden Ansprüche, dadurch gekennzeichnet, daß das oder mindestens eines der Informationssignale zur Identifikation der Einrichtung ein nur diese Einrichtung betreffendes Signal ist.

31. Einrichtung nach Anspruch 30, dadurch gekennzeichnet, daß das einzigartige Informationssignal der Einrichtung vor ihrer Verwendung frei zugeordnet wird.

32. Einrichtung nach Anspruch 30 oder 31, mit:
Einem Empfänger-/Sendemittel, ein induktives Mittel aufweisend, das angepaßt ist, (ein) kodierte(s) modulierte(s) Signal(e) zu senden, einem Speichermittel zum Speichern des einzigartigen Informationssignals und einem Modulationsmittel, wobei das Empfangs-/Sendemittel und das Speichermittel angepaßt sind, um gemeinsam mit dem Modulationsmittel zu kooperieren, um auf der ausgewählten Trägerfrequenz das einzigartige Informationssignal zu senden, und wobei das Steuermittel angepaßt ist, um den Betrieb von Speicher-, Modulations- und Empfänger-/Sendemittel zu koordinieren.

33. Identifikationssystem mit:
Einer identifizierbaren Einrichtung, wobei die Einrichtung Sendemittel aufweist, die angepaßt sind, um mindestens ein Informationssignal von der Einrichtung zu einem externen Empfänger zu senden, die Sendemittel angepaßt sind, um das Informationssignal auf einer Trägersignalfrequenz zu senden und einen Einrichtungs-Identifizierer, der den externen Empfänger aufweist, dadurch gekennzeichnet, daß die Einrichtung ein Steuermittel zum Auswählen der Frequenz des Trägersignals aus einem festgelegten Satz Trägersignalfrequenzen, auf der das Sendemittel das Informationssignal senden soll.

**34.** Identifikationssystem nach Anspruch 33 mit mindestens zwei getrennt identifizierbaren Einrichtungen, jeweils aufweisend ein Sendemittel, das angepaßt ist, um mindestens ein Informationssignal von der Einrichtung an den externen Empfänger zu senden, wobei das Sendemittel angepaßt ist, um das Informationssignal auf einer Trägersignalfrequenz zu senden, und ein Steuermittel zum Auswählen der Frequenz des Trägersignals aus einem festgelegten Satz von Trägersignalfrequenzen, auf der das Sendemittel das Informationssignal senden soll.

**35.** Identifikationssystem nach Anspruch 34, dadurch gekennzeichnet, daß die Identifiziereinrichtung ein System-Empfängermittel aufweist, das angepaßt ist, um jede ausgewählte Trägersignalfrequenz zur Identifikation jede der Einrichtungen zu empfangen.

**36.** Identifikationssystem nach Anspruch 35, dadurch gekennzeichnet, daß jede der ausgewählten Trägersignalfrequenzen gleichzeitig empfangen wird.

**37.** Identifikationssystem nach Anspruch 35 oder 36, dadurch gekennzeichnet, daß das Empfängermittel logische Mittel umfaßt, die angepaßt sind, um ankommende Signale mit derselben ausgewählten Trägersignalfrequenz zu ignorieren.

**38.** Identifikationssystem nach Anspruch 34, dadurch gekennzeichnet, daß jede der Einrichtungen eine Einrichtung nach einem der Ansprüche 30 bis 32 ist, das System einen Identifiziereinrichtungs-Code-Empfänger aufweist und wobei jede Einrichtung ihr eigenes Identifikationssignal zu dem Code-Empfänger sendet und der Code-Empfänger jeden einzigartigen Code empfängt und die entsprechende Einrichtung identifiziert.

**39.** System nach Anspruch 38, dadurch gekennzeichnet, daß jede Einrichtung in einem Etikett/Anhänger enthalten ist.

**40.** System nach Anspruch 38 oder 39, dadurch gekennzeichnet, daß der Code-Empfänger ein Demodulationsmittel zur Demodulation des Informationssignales aufweist.

**41.** System nach Anspruch 40, dadurch gekennzeichnet, daß das Demodulationsmittel angepaßt ist, um die Informationssignale der ersten und zweiten Einrichtung bei ihren entsprechenden Trägersignalfrequenzen zu demodulieren, um erste und zweite entsprechende Einrichtungs-Identifiziercode zu erhalten.

**42.** System nach einem der Ansprüche 38 bis 41, gekennzeichnet, durch ein Vergleicher-Mittel, das angepaßt ist, um verstümmelte Einrichtungs- oder Etikett/Anhänger-Codes oder -Signale zu mißachten.

**43.** System nach einem oder mehreren der Ansprüche 38 bis 42, gekennzeichnet durch einen Elektromagnetkraftfeld-Generator/Strahler, zum Erzeugen eines elektromagnetischen Kraftfeldes und dadurch, daß die Einrichtung induktive Mittel umfaßt, die angepaßt sind, um Energie von dem Kraftfeld zu erhalten, um die Einrichtung zu betreiben.

**44.** System nach Anspruch 43, gekennzeichnet durch die Einrichtungen nach Ansprüchen 22 und 30 und dadurch daß das Empfängermittel zu der Frequenz des Elektromagnetfeldes synchronisiert ist, um die Demodulation jedes Signales zu erleichtern.

**45.** System nach Anspruch 43 oder 44, dadurch gekennzeichnet, daß mindestens eine ausgewählte Trägersignalfrequenz phasenkohärent erzeugt ist und das Kraftfeld als Bezugsfrequenz benutzt.

**46.** System nach Anspruch 45, dadurch gekennzeichnet, daß die mindestens eine Trägersignalfrequenz erzeugt wird durch Verwendung mindestens eines phasenstarren Rahmen-Frequenzverstärkers und nachgeteilt wurde, um eine gewünschte Trägersignalfrequenz zu erhalten.

**47.** System nach Anspruch 46, dadurch gekennzeichnet, daß erzeugte Frequenzen, die zu Harmonischen des Kraftfeldes Korrespondieren, ignoriert werden.

**48.** Kommunikationsverfahren zwischen einem Abfragegerät und mindestens einer entfernten Einrichtung, mit folgenden Schritten:

Jede entfernte Einrichtung erzeugt ein erstes Informationssignal zum Senden über ein Trägersignal auf einer Frequenz, die durch jede entfernte Einrichtung aus einem festgelegten Satz von Trägersignalfrequenzen ausgewählt wurde, wobei die Frequenz des Trägersignals von jeder entfernten Einrichtung bestimmt wird;

Senden des ersten Informationssignales von jeder entfernten Einrichtung zu dem Abfragegerät und

Erzeugen und Senden der ersten Informationssignale nacheinander oder sich bei jedem Senden wiederholend über ein neues Trägersignal, wobei die Frequenz des neuen Trägersignals in jeder entfernten Einrichtung intern neu ausgewählt wird.

**49.** Verfahren nach Anspruch 48, dadurch gekennzeichnet, daß eine Mehrzahl entfernter Einrichtungen vorgesehen sind und jede entfernte Einrichtung ihr besonderes erstes Informationssignal zu dem Abfragegerät gleichzeitig sendet.

**50.** Verfahren nach Anspruch 48 oder 49, dadurch gekennzeichnet, daß das oder jedes erstes Informationssignal einen für die entfernte Einrichtung einzigartigen Code aufweist, die das Informationssignal sendet.

## Revendications

**1.** Dispositif à identifier, comprenant:

des moyens formant émetteur adaptés pour transmettre au moins un signal d'information à partir du dispositif à un récepteur externe, les moyens formant émetteur étant adaptés pour transmettre ledit signal d'information à une fréquence de signal porteur;

caractérisé en ce que le dispositif comprend des moyens de commande pour sélectionner à partir d'un ensemble prédéterminé de fréquences de signaux porteurs, la fréquence du signal porteur à laquelle les moyens formant émetteur doivent transmettre ledit signal d'information.

**2.** Dispositif selon la revendication 1, caractérisé en ce que le ou chaque signal d'information est transmis à l'aide, à chaque émission, d'une nouvelle fréquence sélectionnée de signaux porteurs, ou d'un ensemble nouvellement sélectionné de fréquences de signaux porteurs.

**3.** Dispositif selon la revendication 2, caractérisé en ce que les moyens de commande resélectionnent la(les) fréquence(s) de signaux porteurs nouvellement sélectionnée(s) à partir de l'ensemble prédéterminé de fréquences de signaux porteurs en vue de la reémission dudit signal d'information.

**4.** Dispositif selon la revendication 2 ou la revendication 3, caractérisé en ce que ledit dispositif continue de resélectionner la(les) fréquence(s) et de retransmettre ledit signal d'information tant que le dispositif est sous tension.

**5.** Dispositif selon l'une quelconque des revendications précédentes, caractérisé en ce que les moyens formant émetteur sont adaptés pour transmettre un certain nombre de signaux d'information, chacun à une pluralité de fréquences de signaux porteurs sélectionnées.

**6.** Dispositif selon la revendication 1 ou la revendication 2, caractérisé en ce que le ou chaque signal d'information est transmis à un ensemble de fréquences de signaux porteurs sélectionnées de manière séquentielle ou cyclique.

**7.** Dispositif selon la revendication 1 ou la revendication 2, caractérisé en ce que le ou chaque signal d'information est transmis à un ensemble de fréquences de signaux porteurs sélectionnées simultanément aux autres.

**8.** Dispositif selon la revendication 7, caractérisé en ce que le ou chaque signal d'information est transmis à différents ensembles de fréquences de signaux porteurs sélectionnées, de manière séquentielle ou cyclique.

**9.** Dispositif selon l'une quelconque des revendications précédentes, caractérisé en ce que la fréquence de la fréquence de signaux porteurs sélectionnée ou de l'ensemble de fréquences de signaux porteurs est sélectionnée indépendamment des influences extérieures.

**10.** Dispositif selon l'une quelconque des revendications précédentes, caractérisé en ce que la fréquence de la fréquence sélectionnée de signaux porteurs ou de l'ensemble de fréquences de signaux porteurs sélectionnées est déterminée à l'intérieur du dispositif.

**11.** Dispositif selon la revendication 10, caractérisé en ce qu'il comprend, en outre:

des moyens formant mémoire pour mémoriser ledit ensemble prédéterminé de fréquences de signaux porteurs.

**12.** Dispositif selon l'une quelconque des revendications précédentes, caractérisé en ce que la sélection ou la resélection de la fréquence de signaux porteurs est effectuée en fonction d'une pondération de probabilité prédéterminée.

**13.** Dispositif selon la revendication 12, caractérisé en ce que chaque pondération de probabilité correspond à une fréquence de signaux porteurs et est affectée en fonction de l'utilisation désirée de la fréquence de signaux porteurs correspondante.

**14.** Dispositif selon l'une quelconque des revendications précédentes, caractérisé en ce que la fréquence de signaux porteurs utilisée à chaque émission de la fréquence de signaux porteurs sélectionnée ou de l'ensemble de fréquences de signaux porteurs sélectionnées, est sélectionnée de manière aléatoire ou pseudo-aléatoire.

15. Dispositif selon la revendication 14, caractérisé en ce que les moyens de commande utilisent un circuit logique à suites pseudo-aléatoires de binaires pour sélectionner ou resélectionner, de manière aléatoire, ladite ou lesdites fréquence(s) sélectionnée(s).

16. Dispositif selon la revendication 15, caractérisé en ce que le circuit logique à suites pseudo-aléatoires de binaires est adapté pour présenter une valeur initiale chargée dans ce dernier, lorsque le dispositif est mis sous tension pour la première fois, la valeur étant mémorisée dans une mémoire dans le dispositif.

17. Dispositif selon la revendication 16, caractérisé en ce que la valeur est arbitrairement affectée au dispositif avant utilisation du dispositif.

18. Dispositif selon l'une quelconque des revendications précédentes, caractérisé en ce que les moyens formant émetteur sont adaptés pour entrer dans un état de repos ou émettre sur un canal redondant afin d'assurer un arrêt de l'émission pendant un laps de temps prédéterminé.

19. Dispositif selon l'une quelconque des revendications précédentes, caractérisé en ce que, à réception d'un signal de sélection externe, les moyens de commande sélectionnent ou resélectionnent la ou les fréquence(s) ou au moins une des fréquences de signaux porteurs pour l'émission.

20. Dispositif selon l'une quelconque des revendications précédentes, caractérisé en ce que le ou chaque signal d'information est émis en réponse à un signal d'interrogation.

21. Dispositif selon l'une quelconque des revendications précédentes, caractérisé en ce qu'il comprend, en outre:
des moyens de génération de fréquences pour générer des fréquences de signaux porteurs.

22. Dispositif selon l'une quelconque des revendications précédentes, caractérisé en ce qu'il comprend, en outre, des moyens formant récepteur du dispositif adaptés pour recevoir des informations de synchronisation provenant d'une source externe.

23. Dispositif selon la revendication 22 dépendante de la revendication 21, caractérisé en ce que lesdits moyens de génération de fréquences sont synchronisés sur lesdites informations de synchronisation.

24. Dispositif selon la revendication 22 ou la revendication 23, caractérisé en ce que lesdites informations de synchronisation sont extraites d'un champ électromagnétique environnant.

25. Dispositif selon la revendication 24, caractérisé en ce que l'énergie de mise sous tension est également extraite dudit champ électromagnétique.

26. Dispositif selon l'une quelconque des revendications 1 à 21, caractérisé en ce que le dispositif est asynchrone.

27. Dispositif selon l'une quelconque des revendications précédentes, caractérisé en ce que le dispositif est un dispositif passif.

28. Dispositif selon l'une quelconque des revendications précédentes, caractérisé en ce que le dispositif est réalisé sous la forme d'une puce à circuits intégrés.

29. Dispositif selon la revendication 28, caractérisé en ce que la puce est une puce VLSI.

30. Dispositif selon l'une quelconque des revendications précédentes, caractérisé en ce que ledit signal ou au moins un desdits signaux d'information est un signal unique transmis au dispositif en vue de l'identification dudit dispositif.

31. Dispositif selon la revendication 30, caractérisé en ce que le signal d'information unique est arbitrairement affecté au dispositif avant utilisation du dispositif.

32. Dispositif selon la revendication 30 ou la revendication 31, caractérisé en ce qu'il comprend:
des moyens formant récepteur/émetteur comprenant un moyen inductif adapté pour transmettre un signal ou des signaux modulé(s) codé(s), un moyen formant mémoire pour mémoriser le signal d'information unique, et un moyen de modulation,
lesdits moyens formant récepteur/émetteur et ledit moyen formant mémoire étant adaptés pour co-opérer avec ledit moyen de modulation pour transmettre à la fréquence de signaux porteurs sélectionnée le signal d'information unique,
les moyens de commande étant adaptés pour coordonner le fonctionnement desdits moyens formant mémoire, de modulation et formant émetteur/récepteur.

**33.** Système d'identification, comprenant :

un dispositif à identifier, le dispositif comprenant des moyens formant émetteur adaptés pour transmettre au moins un signal d'information à partir du dispositif à un récepteur externe, les moyens formant émetteur étant adaptés pour transmettre ledit signal d'information à une fréquence de signaux porteurs;

un dispositif d'identification du dispositif comprenant le récepteur externe; et

caractérisé en ce que le dispositif comprend des moyens de commande pour sélectionner à partir d'un ensemble prédéterminé de fréquences de signaux porteurs, la fréquence du signal porteur à laquelle les moyens formant émetteur doivent transmettre ledit signal d'information.

**34.** Système d'identification selon la revendication 33, caractérisé en ce qu'il comprend au moins deux dispositifs pouvant être identifiés, espacés l'un de l'autre, comprenant chacun des moyens formant émetteur adaptés pour transmettre au moins un signal d'information depuis ce dispositif au récepteur externe, les moyens formant émetteur étant adaptés pour transmettre ledit signal d'information à une fréquence de signaux porteurs; et des moyens de commande pour sélectionner à partir d'un ensemble prédéterminé de fréquences de signaux porteurs la fréquence du signal porteur à laquelle les moyens formant émetteur doivent transmettre ledit signal d'information.

**35.** Système d'identification selon la revendication 34, caractérisé en ce que le dispositif d'identification de dispositifs comprend des moyens formant récepteur de système adaptés pour recevoir chaque fréquence de signaux porteurs sélectionnée en vue de l'identification de chacun desdits dispositifs.

**36.** Système d'identification selon la revendication 35, caractérisé en ce que chacune desdites fréquences de signaux porteurs sélectionnées est reçue simultanément aux autres.

**37.** Système d'identification selon la revendication 35 ou la revendication 36, caractérisé en ce que les moyens formant récepteur comprennent un moyen logique adapté pour ignorer les signaux d'entrée ayant la même fréquence de signaux porteurs sélectionnée.

**38.** Système d'identification selon la revendication 34, dans lequel chacun des dispositifs est un dispositif selon l'une quelconque des revendications 30 à 32, caractérisé en ce que le système comprend un récepteur de codes d'identification, et en ce que

chaque dispositif transmet son signal d'identification unique audit récepteur de codes et le récepteur de codes reçoit chaque code unique et identifie chaque dispositif correspondant.

**39.** Système selon la revendication 38, caractérisé en ce que chaque dispositif est placé dans une étiquette.

**40.** Système selon la revendication 38 ou la revendication 39, caractérisé en ce que le récepteur de codes comprend un moyen formant démodulateur pour démoduler le signal d'information.

**41.** Système selon la revendication 40, caractérisé en ce que ledit moyen formant démodulateur est adapté pour démoduler les signaux d'information à partir des premier et deuxième dispositifs à leurs fréquences de signaux porteurs correspondantes pour obtenir des premier et deuxième codes d'identification de dispositifs correspondants.

**42.** Système selon l'une quelconque des revendications 38 à 41, caractérisé en ce qu'il comprend, en outre, des moyens de comparaison adaptés pour ne pas tenir compte du dispositif ou des codes d'étiquettes ou des signaux qui ont été brouillés.

**43.** Système selon l'une quelconque des revendications 38 à 42, caractérisé en ce que le système comprend un générateur/dispositif de rayonnement de champ de puissance électromagnétique pour générer un champ de puissance électromagnétique, et en ce que le dispositif comprend un moyen inductif adapté pour recevoir la puissance du champ de puissance pour actionner le dispositif.

**44.** Système selon la revendication 43, caractérisé en ce que les dispositifs sont tels que revendiqués dans la revendication 30 dépendant directement ou indirectement de la revendication 22, et en ce que les moyens formant récepteur sont synchronisés à la fréquence du champ électromagnétique pour faciliter la démodulation de chaque signal.

**45.** Système selon la revendication 43 ou la revendication 44, caractérisé en ce qu'au moins la fréquence de signaux porteurs sélectionnée est générée avec une cohérence de phases en utilisant le champ de puissance comme référence de fréquence.

**46.** Système selon la revendication 45, caractérisé en ce qu'au moins une fréquence de signaux porteurs est générée à l'aide d'au moins un multiplicateur de fréquences à boucle à phase asservie, et divisée ensuite pour obtenir une fréquence de signaux porteurs désirée.

**47.** Système selon la revendication 46, caractérisé en ce que les fréquences générées qui correspondent aux harmoniques du champ de puissance sont ignorées.

**48.** Procédé de communication entre un interrogateur et au moins un dispositif situé à distance, ledit procédé comprenant les étapes suivantes:

chaque dispositif situé à distance génère un premier signal d'information pour l'émission via un signal porteur à une fréquence sélectionnée par chaque dispositif situé à distance correspondant à partir d'un ensemble prédéterminé correspondant de fréquences de signaux porteurs, la fréquence du signal porteur étant déterminée par chaque dispositif situé à distance;

émission desdits premiers signaux d'informations à partir de chaque dispositif situé à distance vers l'interrogateur; et

génération et émission des premiers signaux d'information de manière successive ou répétée à chaque émission via un nouveau signal porteur, la fréquence du nouveau signal porteur étant nouvellement sélectionnée à l'intérieur de chaque dispositif situé à distance;

**49.** Procédé selon la revendication 48, caractérisé en ce qu'il existe une pluralité de dits dispositifs situés à distance, et en ce que chaque dispositif situé à distance transmet son premier signal d'information correspondant à l'interrogateur simultanément aux autres.

**50.** Procédé selon la revendication 48 ou la revendication 49, caractérisé en ce que le ou chaque premier signal d'information comprend un code unique pour le dispositif situé à distance qui a transmis ce signal d'information.

FIGURE. 1A

BASE STATION

TX

FREQUENCY AND PHASE CONTROLLER → 2 OR 3 DIMENSIONAL POWERING COIL

MAGNETIC FIELD

TRANSPONDER (S)

PICKUP COIL ↔ INTEGRATED CIRCUIT (IC)

(TIMING REF.)

RF, DATA OR CODE SIGNAL(S).

RECEIVER AND DECODER ← 2 OR 3 DIMENSIONAL ANTENNA STRUCTURE

CODE OR SIGNAL

RX

FIGURE.1B

BASE STATION

TX

FREQUENCY AND PHASE CONTROLLER

2 OR 3 DIMENSIONAL POWERING COIL

MASTER TIME REFERENCE

(TIMING REF.)

MAGNETIC FIELD

TRANSPONDER (S)

PICKUP COIL

INTEGRATED CIRCUIT (IC)

RECEIVER AND DECODER

2 OR 3 DIMENSIONAL ANTENNA STRUCTURE

CODE OR SIGNAL

RF, DATA OR CODE SIGNAL(S).

RX

CHIP OUTLINE

STRAY CHIP
CAPACITY

BALANCE
OF
TRANSPONDER
CIRCUIT

FIGURE. 2A

FIGURE. 2B

IC OUTLINE

dc Power Input

CARRIER
OSCILLATOR    MODULATOR

T

+

Cs

$C_T$

TR

IC- with
electronic circuitry

D

20

FIGURE. 3A

Ic Outline

ELECTRICAL
ENERGY
STORAGE

PICKUP
COIL

RECTIFIER

VOLTAGE
REGULATOR

CARRIER
OSCILLATOR

DIVIDER

CODE
GENERATOR
LOGIC

CARRIER

MODULATOR

FIGURE. 3B

ENERGY
STORAGE

ANTENNA
COIL

SHUNT
REGULATOR

RECTIFIER

CARRIER
OSCILLATOR

DIVIDER

CODE
GENERATOR

CARRIER

MODULATOR

Ic Outline

EP 0 390 822 B1

FIGURE·4A

Ic outline

SUPPLY RAIL

$C_S$

$C_t$

MAG MOD

IN  CARRIER OSCILLATOR  OSC.OUT  DIVIDER  CLK  MEMORY AND CODE GENERATOR  CODE OR OTHER INFO.  MODULATOR  MOD  T  SHUNT REGULATOR

RECTIFIER

CARRIER

REFERENCE RAIL

EP 0 390 822 B1

FIGURE. 4B

IC outline

SUPPLY RAIL

SHUNT REGULATOR

RECTIFIER

CARRIER OSCILLATOR

MAG. MOD

OSC. OUT

DIVIDER

CLK

CARRIER

MEMORY AND CODE GENERATOR

CODE OR OTHER INFO.

MODULATOR

MOD. CARRIER

T

RF out

REFERENCE RAIL

$C_s$

$C_t$

EP 0 390 822 B1

23

Time
reference

| PHASE DETECTOR | | LOW PASS FILTER | | VOLTAGE CONTROLLED OSCILLATOR | | DIVIDE BY m |

DIVIDE BY pm÷n

FIGURE.5

EP 0 390 822 B1

POWERING
PERIOD

PHASE SENSOR → LOOP FILTER AND VCO → ÷m → CARRIER OUTPUT

÷(pm+n)

PROGRAMMABLE
DIVIDER

SELECTION
OF
n
CIRCUITRY

SINGLE OSCILLATOR WITH
SETTING OF CARRIER FREQUENCY
PERFORMED BY CHOOSING 'n'

FIGURE. 6

POWERING
PERIOD

OSCILLATOR 1

OSCILLATOR 2

OSCILLATOR N

SELECTION
CIRCUITRY → CARRIER OSCILLATOR

INDIVIDUAL PRESET OSCILLATORS, CARRIER FREQUENCY
SELECTED BY CHOOSING OUTPUT FROM (AT LEAST)
ONE OSCILLATOR

FIGURE. 7

25

$$I_{OUT} = m \times (I_1 + I_2 + \ldots + I_n)$$

$m$ = MIRROR CURRENT GAIN

RECTIFIER

FIGURE. 8A

$I_{OUT}$

$\downarrow I_3$  $\downarrow I_2$  $\downarrow I_1$

RECTIFIER

FIGURE. 8B

CONTROLLED
CURRENT SOURCE

$I_{OUT}$

DATA
INPUT

WAVE
SHAPER

$I$

RF SIGNAL

RECTIFIER

FIGURE 10A

DATA
INPUT

SHIFT REGISTER

$n$  SHIFTS PER BIT

$n$      3  2  1

RAISED COSINE
WEIGHTED
CURRENT SOURCE

$I_{OUT}$

RF
SIGNAL

RECTIFIER

FIGURE. 10B

26

FIGURE.9

FREQUENCY/PHASE MODULATION DETECTOR

FIGURE. 11

ENVELOPE DETECTOR

FIGURE. 12